# EUROPÄISCHE PATENTSCHRIFT

(11) **EP 0 658 901 B1**
(45) Veröffentlichungstag und Bekanntmachung des Hinweises auf die Patenterteilung: **22.07.1998**
(21) Anmeldenummer: 94119484.7
(22) Anmeldetag: 09.12.1994
(51) Int. Cl.: G11B 33/04, B42F 7/04

(54) **Ablageelement, für Compactdiscs und zugehörige Texthefte**
Filing device for compact discs and their booklets
Dispositif de rangement pour disques compacts et leur livret

(30) Priorität: 17.12.1993 DE 9319421 U
(43) Veröffentlichungstag der Anmeldung: 21.06.1995
(73) Patentinhaber: Deja-Accessoires GmbH, D-51427 Bergisch Gladbach (DE)
(72) Erfinder: Deja, Günter, D-51491 Overath (DE)
(74) Vertreter: Langmaack, Jürgen, Dipl.-Ing.

(56) Entgegenhaltungen:
- WO-A-89/10882
- CH-A- 676 699
- DE-U- 9 312 636
- DE-U- 9 319 421
- US-A- 4 837 652
- US-A- 5 275 438

## Beschreibung

Die geringe Größe und das geringe Gewicht der Abspielgeräte für Compactdisc hat zu einer größeren Mobilität geführt, so daß hier seitens der Verbraucher der Wunsch besteht, auch eine größere Zahl von CD's mit sich zu führen. Beispielsweise bei der Verwendung von CD-Plattenwechslern in Kraftfahrzeugen ist es jedoch erforderlich, daß die CD's aus den üblichen Aufbewahrungskassetten herausgenommen und in eine spezielle Plattenkassette eingesetzt werden. Will man nun die zugehörigen Informationsblätter und/oder Texthefte ebenfalls mit sich führen, ist man entweder darauf angewiesen, zusätzlich die Aufbewahrungskassette mitzuführen oder aber das Textheft bzw, das Informationsblatt mit dem "Inhaltsverzeichnis" aus der Aufbewahrungskassette herauszunehmen und lose mitzuführen.

Aus DE-U-93 12 636 ist ein Ablageelement für CD-Texthefte bekannt, bei dem auf einem mit einem Heftrand versehenen Träger wenigstens eine Einschubtasche angeordnet ist, deren Öffnung dem Heftrand zugekehrt ist und die auf ihrer Außenseite an der der Öffnung der Einschubtasche abgekehrten Kante mit einer Haltelasche überdeckt ist. Das vorbekannte Ablageelement dient dazu, derartige CD-Texthefte gesondert von den zugehörigen CD's abzulegen, wobei die einzelnen Ablageelemente nach Art eines Buches zusammengefaßt sind, so daß die Ablageelemente wie ein Buch aufgeblättert werden können und dann die jeweils abgelegten CD-Texthefte ebenfalls wie ein Buch gelesen werden können, ohne daß sie aus dem Ablageelement entfernt werden müssen.

Aus WO-A-89 10 882 ist ein Ablageelement bekannt, das ebenfalls mit weiteren Ablageelementen in Buchform zusammengefaßt werden kann. Hier ist ein Träger vorgesehen, der auf seiner Vorderseite wenigstens eine Einschubtasche für eine CD und auf seiner Rückseite eine Einschubtasche für zugehöriges Druckwerk aufweist. Die Öffnungen der Einschubtaschen sind, bezogen auf den Heftrand und die dadurch definierte Buchform, nach oben ausgerichtet. Bewahrt man in diesem Ablageelement das jeweils zu einer CD zugehörige Textheft auf, so muß das Textheft für eine Benutzung aus seiner Einschubtasche herausgezogen werden und nach Benutzung wieder eingeschoben werden. Die Einschubtaschen für die CD's weisen keinerlei Sicherungsmittel auf. Da derartige Ablageelemente gerade für die Handhabung bei einer Reise oder dergleichen vorgesehen sind, besteht hierbei die Gefahr, daß CD's aus ihren Einschubtaschen herausfallen können, wenn ein derartiges Ablagebuch bei seiner Handhabung "auf den Kopf" gestellt wird. Die Kontrolle, ob CD und zugehöriges CD-Textheft auch richtig einander zugeordnet sind, ist nur möglich, wenn das betreffende Ablageelement umgeblättert wird.

Der Erfindung liegt die Aufgabe zugrunde, eine geordnete und systematisierbare Aufbewahrungs- und Archivierungsmöglichkeit für die CD's zusammen mit den zugehörigen Informationsblättern und Textheften zu schaffen.

Diese Aufgabe wird gemäß der Erfindung mit den im Anspruch 1 angegebenen Mitteln gelöst. Ein derartiges Ablageelement erlaubt es, bei heftförmigen Informationsblättern, insbesondere Textheften zu Compactdisc, die letzte Seite des Heftes in die erste Einschubtasche einzuschieben, so daß das Heft problemlos umgeblättert werden kann. In geschlossenem Zustand liegt das Heft auf der Außenseite der ersten Einschubtasche auf und kann hierbei insgesamt oder auch nur mit einem Teil der Seiten unter die auf der Außenseite angeordnete Haltelasche geschoben werden. Wenn der Öffnungsrand des Heftes unter die Haltelasche geschoben ist, dann lassen sich beispielsweise bei einer buchförmigen oder mappenförmigen Anordnung von einer Vielzahl entsprechender Ablageelemente, diese wie in einem Buch umblättern, ohne daß sich hierbei die eingeschobenen Hefte öffnen. Ein Abknicken einzelner Seiten bei einem Umblättern der Ablageelemente ist damit ausgeschlossen. Besonders zweckmäßig ist es hierbei, wenn die Öffnung der ersten Einschubtasche dem Heftrand zugekehrt ist. Diese Anordnung hat den Vorteil, daß die Heftung des eingeschobenen Heftes unmittelbar neben der Heftung des eingehefteten blattförmigen Trägers des Ablageelementes liegt, so daß die Ablageelemente und die von den Ablageelementen gehaltenen Hefte in gleicher Richtung umgeblättert werden können. Die Anordnung kann hierbei so getroffen werden, daß jeweils ein oder zwei erste Einschubtaschen auf nur einer Seite des blattförmigen Trägers angeordnet sind oder aber auch in der Form, daß sowohl die Vorderseite als auch die Rückseite des blattförmigen Trägers mit einer oder mehreren ersten Einschubtaschen versehen ist. Auf dieser ersten Einschubtasche aufliegend ist nun eine zweite Einschubtasche vorgesehen, die auf ihrer der Einschuböffnung abgekehrten Kante von der Einschublasche überdeckt ist. In dieser zweiten Einschubtasche wird nun die zum Textheft gehörige CD aufbewahrt, die vom Textheft überdeckt wird. Eine Entnahme ist erst möglich, wenn der freie Rand des Textheftes aus der Haltelasche herausgezogen und das Textheft umgelegt worden ist. Das Textheft dient somit zugleich als Schutz und als Sicherung für die CD.

In vorteilhafter Ausgestaltung der Erfindung ist vorgesehen, daß die Haltelasche taschenförmig ausgebildet ist und daß ihre Einschuböffnung parallel zur Öffnung der Einschubtasche verläuft. Dies hat den Vorteil, daß durch die Haltelasche die gesamte Öffnungskante des eingeschobenen Heftes abgedeckt wird und somit der öffnungskante des eingeschobenen Heftes ein sicherer Halt gegeben ist. In besonders zweckmäßiger Ausgestaltung ist hierbei vorgesehen, daß die Haltelasche mit wenigstens einer in Richtung auf die Öffnung der Einschubtasche weisenden Griffnase versehen ist. Dies erlaubt es, den Rand der Haltelasche anzuheben, so daß ein bequemes Einschieben des Öffnungsrandes des Heftes möglich ist.

In besonders zweckmäßiger Ausgestaltung der Erfindung ist vorgesehen, daß der Träger aus einem durchsichtigen Material besteht. Dies hat den Vorteil, daß bei der Anordnung von einer oder mehreren Einschubtaschen auf nur einer Seite des blattförmigen Trägers auch die Beschriftung der Rückseite des eingeschobenen Heftes gelesen werden kann. Es besteht aber auch die Möglichkeit, bei der Archivierung des jeweils einer CD beigefügten Informationsmaterials, bestehend aus einem Textheft und einem als "Inhaltsverzeichnis" ausgebildeten Einzelblattes, auf dem die einzelnen Musikstücke in ihrer Reihenfolge aufgezeichnet sind, in der Weise zu vorzugehen, daß das Textheft mit der letzten Seite eingeschoben wird und daß davor mit der Informationsseite zur Rückseite des Trägers das "Inhaltsverzeichnis" eingeschoben wird, so daß das Inhaltsverzeichnis von der Rückseite des Trägers durch das durchsichtige Trägermaterial hindurchgelesen werden kann. Hierzu ist es besonders vorteilhaft, wenn entsprechend einer Ausgestaltung der Erfindung die Einschubtasche in ihren Abmessungen dem einer CD-Kassette beigegebenen Inhaltsverzeichnisblatt entspricht und daß der Abstand der Kante der Öffnung der Einschubtasche von der hierzu nächstliegenden Kante der Haltelasche etwas kürzer ist als die Länge einer Seite eines einer CD-Kassette beigegebenen Textheftes, und daß die zweite Einschubtasche in der Bemessung ihrer Einstecktiefe in etwa dem halben Durchmesser einer CD entspricht. Bei diesen Abmessungen kann das Inhaltsverzeichnisblatt vollständig und knickfrei in die Einschubtasche eingeschoben werden, da das Textheft in seiner Breite, d. h. des Abstandes zwischen Heftung des Textheftes und seines Öffnungsrandes, kürzer ist als die entsprechende Breite des Inhaltsverzeichnisblattes, so daß eine sichere Festlegung des Öffnungsrandes des Textheftes gewährleistet ist. Die CD ist nach Öffnen des Textheftes bequem zu entnehmen. Das die zweite Einschubtasche bildende Material ist zweckmäßig zumindest auf seiner innenliegenden Fläche mit einer samtartigen Oberflächenstruktur versehen. Hierdurch wirde zumindest ein Verkratzen der beschichteten Oberfläche der CD auch bei häufigem Gebrauch vermieden.

In besonders vorteilhafter Ausgestaltung der Erfindung ist hierbei vorgesehen, daß die Abdecklasche aus einem undurchsichtigen, insbesondere farbigen Material besteht. Durch die Wahl unterschiedlicher Farben besteht hierbei die Möglichkeit einer einfachen Kennzeichnung, um je nach Wunsch unterschiedliche Interpreten, unterschiedliche Musikart oder dergl. über die Auswahl entsprechend unterschiedlicher Farben zusammenfassen zu können. Bei einer Abmessung der Einschubtasche, wie vorstehend beschrieben, bei der sowohl das etwas größere Inhaltsverzeichnisblatt als auch das Textheft zusammen in einer Einschubtasche eingeschoben werden, bietet die Abdecklasche aus undurchsichtigem farbigen Material weiterhin den Vorteil, daß der vom Textheft nicht überdeckte Rand der Rückseite des Inhaltsverzeichnisblattes abgedeckt ist und somit ein einheitliches optisches Bild gegeben ist.

Entsprechend weiteren Ausgestaltungen der Erfindung kann der Träger aus einem thermoplastischen Kunststoff bestehen und über seinen Heftrand mit dem Rückenteil eines bucheinbandartigen Schutzdeckels verschweißt sein. Der Träger kann aber am Heftrand auch mit einer Lochung für einen Schutzdeckel mit Ringmechanik versehen sein.

Die Erfindung wird anhand schematischer Zeichnungen eines Ausführungsbeispieles näher erläutert. Es zeigen:
- Fig. 1: eine Aufsicht auf einen Träger mit zwei Einschubtaschen,
- Fig. 2: einen Schnitt gem. der Linie II-II in Fig. 1 mit eingeschobenem Textheft und eingeschobener CD.

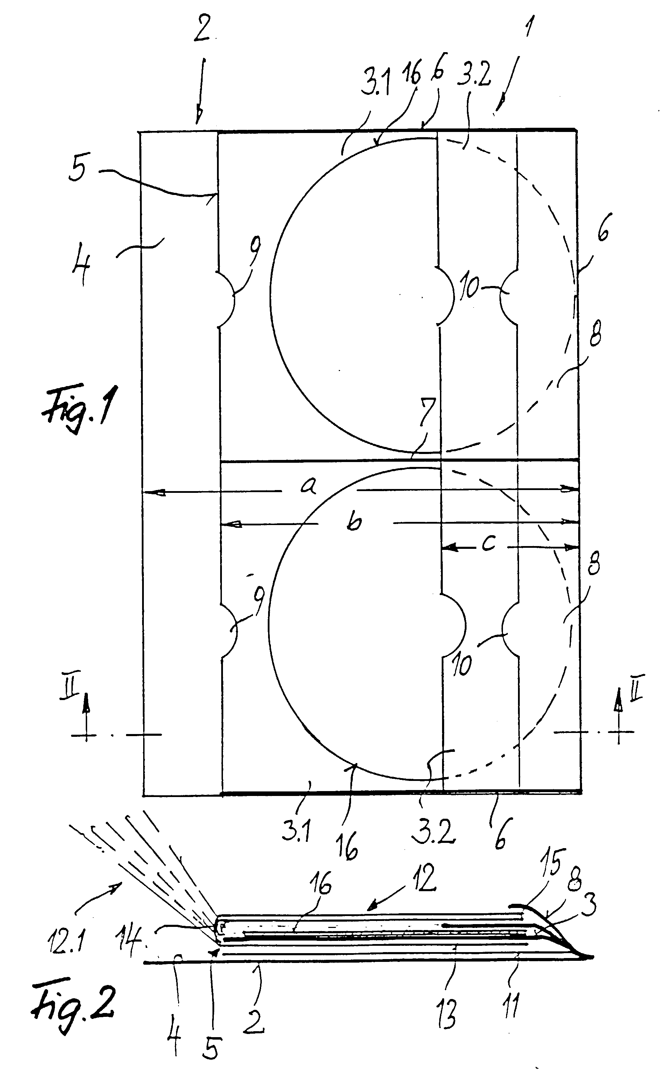

Das in Fig. 1 dargestellte Ablageelement 1 besteht im wesentlichen aus einem blattförmigen Träger 2, beispielsweise einer entsprechend festen, biegsamen Folie aus thermoplastischem Kunststoff. Der Träger 2 ist auf seiner Oberseite mit zwei parallel ausgerichteten ersten Einschubtaschen 3.1 versehen. Der Träger 2 ist hierbei in seiner Breite a etwas größer als die Breite b der ersten Einschubtaschen 3.1, so daß insgesamt ein entsprechender Heftrand 4 vorhanden ist. Die Öffnungen 5 der ersten Einschubtaschen 3.1 sind dem Heftrand 4 zugekehrt. Die ersten Einschubtaschen 3.1 können, wie hier dargestellt, beispielsweise durch eine auf die Folie des Trägers 2 aufgelegte zweite Folie gebildet werden, die über die rückseitigen Schweißnähte 6 sowie die beiden Taschen abteilende Schweißnaht 7 mit dem Träger 2 verschweißt sind.

Auf der Außenseite der beiden ersten Einschubtaschen ist an der der Öffnung 4 abgekehrten Kante jeweils eine, die Außenseite überdeckende Haltelasche 8 vorgesehen. Aufbau und Funktion wird nachstehend anhand von Fig. 2 noch näher beschrieben werden.

Der Rand der Öffnung 5 der ersten Einschubtasche 3.1 ist für die bessere Handhabbarkeit mit einer entsprechenden Griffausnehmung 9 versehen. Die Haltelasche 8 ist an ihrer freien Kante jeweils mit einer in Richtung auf die Öffnung 5 der ersten Einschubtasche 3.1 weisenden Grifflasche 10 versehen. Die Haltelasche 8 ist bei dem dargestellten und beschriebenen Ausführungsbeispiel, das aus Folien aus thermoplastischem Kunststoff gebildet ist, ebenfalls durch einen Streifen aus thermoplastischem Kunststoff gebildet, der an den Rändern 6 und über die Teilungsnaht 7 zusammen mit dem die Taschen bildenden Folienstück fest mit dem Material des Trägers verschweißt ist. Das hat zur Folge, daß auch die Haltelaschen 8 entsprechend taschenförmig ausgebildet sind. Das Ablageelement 1 kann nun an seinem Heftrand mit einer entsprechenden Lochung, ggf. unter Verwendung von Lochverstärkern, versehen sein, so daß mehrere derartiger Ablageelemente in einen Schutzdeckel mit Ringmechanik bekannter Bauart eingeheftet werden können, so daß sich eine buch- bzw. mappenförmige Aufbewahrungsmöglichkeit ergibt.

Auf der ersten Einschubtasche 3.1 ist um diese teilweise überdeckend eine zweite Einschubtasche 3.2 angeordnet, die ebenfalls mit dem Träger 2 randseitig verbunden ist. Die zweite Einschubtasche 3.2 weist eine gegenüber der ersten Einschubtasche 3.1 geringere Breite c auf, die in etwa dem halben Durchmesser einer CD entspricht. Die Haltelasche 8 verläuft über dem "Fußende" der zweiten Einschubtasche.

Wie die Schnittdarstellung in Fig. 2 erkennen läßt, kann nun in ein derartiges Ablageelement das einer CD-Kassette beigegebene Informationsmaterial geordnet und systematisierbar archiviert werden. Dieses Informationsmaterial besteht in der Regel aus einem Einzelblatt, auf dem in Form eines Inhaltsverzeichnisses die auf der zugehörigen CD enthaltenen Musikstücke aufgeführt sind. Ferner ist üblicherweise ein Text- und/oder Informationsheft beigefügt. Das Inhaltsverzeichnis entspricht hierbei in seinen Abmessungen der CD-Kassette, ist also rechteckig, während aufgrund der Bauform der CD-Kassette das zugehörige Textheft quadratisch ist. Die Verwendung des Ablageelementes kann nun in der Weise geschehen, wie in Fig. 2 gezeigt, daß das Inhaltsverzeichnisblatt 11 zu unterst in die erste Einschubtasche 3.1 eingeschoben wird und zwar so, daß das Inhaltsverzeichnisblatt mit seiner beschrifteten Seite aufliegt. Danach wird das Textheft 12 mit seiner letzten Seite 13 ebenfalls in die erste Einschubtasche 3.1 eingeschoben und zwar so weit, daß seine Heftung 14 an der Kante der Einschuböffnung 5 anliegt. Der übrige Teil des Heftes liegt nun auf der Außenseite der Einschubtaschen 3.1 und 3.2 auf und wird mit seinem Öffnungsrand 15 unter die taschenförmige Haltelasche 8 geschoben. Bei geöffnetem Textheft 12 kann nun die zugehörige CD 16 in die zweite Einschubtasche 3.2 eingeschoben bzw. aus ihr entnommen werden. Wird das Textheft 12 geschlossen und mit seinem Öffnungsrand 15 unter die Haltelasche 8 geschoben, ist die CD 16 abgedeckt und gegen Herausfallen gesichert. Somit ist es möglich, das gefüllte und eingeheftete Ablageelement, beispielsweise bei einer Einheftung in einen Ringhefter, wie ein Buch umzublättern, ohne daß die eingeschobenen Texthefte 12 sich öffnen können. Will man das Textheft lesen und/oder eine CD entnehmen, wird das Textheft mit seinem Öffnungsrand 15 aus der Haltelasche 8 herausgezogen und kann ohne Herausnahme aus dem Ablageelement umgeblättert werden, wie dies durch die strichpunktierten Seiten 12.1 angedeutet ist.

Bei der hier gezeigten Ausführungsform, bei der nur auf einer Seite des Trägers 2 Einschubtaschen 3.1 und 3.2 angeordnet sind und wobei zumindest der Träger 2 aus einem durchsichtigen Material hergestellt ist, kann die Anordnung nun so verwendet werden, daß bei aufgeschlagener Mappe das bzw. die Texthefte 12 in den ersten Einschubtaschen 3.1 eines Trägers 2 auf der rechten Mappenseite eingesteckt sind und das zugehörige Inhaltsverzeichnis in einer ersten Einschubtasche des voraufgehenden, auf der linken Seite angeordneten Trägers, so das Inhaltsverzeichnis und Textheft sich jeweils in der gleichen Öffnungsebene befinden.

Das Ablageelement kann nun vielfältig variiert werden.
So ist es durchaus möglich, jeweils nur eine erste Einschubtasche und eine zweite Einschubtasche auf einem entsprechend bemessenen Träger 2 vorzusehen, so daß die in Buch- oder Mappenform zusammengefaßten Ablageelemente in ihren Abmessungen in etwa der Größe der CD-Kassetten entsprechen, so daß eine derartige Mappe auch zusammen mit CD-Kassetten abgestellt werden kann.

## Patentansprüche

1. Ablageelement für ein mappen- oder buchförmiges Aufbewahren von Compactdiscs (16) zusammen mit den jeweils zugehörigen Textheften (12) in Form eines blattförmigen Trägers (2), der über einen Heftrand (4) in einen Schutzdeckel einheftbar oder eingeheftet ist, dadurch gekennzeichnet daß der Träger übereinanderliegend mit wenigstens einer ersten Einschubtasche (3.1) für das Textheft (12) und einer zweiten Einschubtasche (3.2) für die CD (16) versehen ist, sowie mit einer auf der Außenseite der zweiten Einschubtasche (3.2) an der den Öffnungen (5) der Einschubtaschen (3.1, 3.2) abgekehrten Kante angeordneten Haltelasche (8), die nur einen Teilbereich der zweiten Einschubtasche (3.2) überdeckt, wobei die Öffnungen (5) der Einschubtaschen (3.1, 3.2) dem Heftrand (4) zugekehrt sind und wobei die erste Einschubtasche (3.1) in ihren Abmessungen dem einer CD-Kassette beigegebenen Inhaltsverzeichnis (11) entspricht und der Abstand der Kante der Öffnung (5) der ersten Einschubtasche (3.1) von der hierzu nächstliegenden Kante der Haltelasche (8) etwas kürzer ist als die Breite einer Seite eines einer CD-Kassette beigegebenen Textheftes (12).

2. Ablageelement nach Anspruch 1, dadurch gekennzeichnet, daß beide Einschubtaschen (3.1, 3.2) jeweils im Bereich der Kante ihrer Öffnung (5) mit einer Griffausnehmung (9) versehen sind.

3. Ablageelement nach einem der Ansprüche 1 oder 2, dadurch gekennzeichnet, daß die Haltelasche (8) taschenförmig ausgebildet ist und daß ihre Einschuböffnung parallel zu den öffnungen (5) der Einschubtaschen (3.1, 3.2) verläuft.

4. Ablageelement nach einem der Ansprüche 1 bis 3, dadurch gekennzeichnet, daß die Haltelasche (8) mit wenigstens einer in Richtung auf die Öffnung (5) der Einschubtasche (3.1) weisenden Griffnase (10) versehen ist.

5. Ablageelement nach einem der Ansprüche 1 bis 4, dadurch gekennzeichnet, daß zumindest der Träger (2) aus einem durchsichtigen Material besteht.

6. Ablageelement nach einem der Ansprüche 1 bis 5, dadurch gekennzeichnet, daß die zweite Einschubtasche (3.2) in der Bemessung ihrer Einstecktiefe dem halben Durchmesser einer CD entspricht.

7. Ablageelement nach einem der Ansprüche 1 bis 6, dadurch gekennzeichnet, daß das die zweite Einschubtasche (3.2) bildende Material zumindest auf seiner innenliegenden Fläche eine samtartige Oberflächenstruktur aufweist.

8. Ablageelement nach einem der Ansprüche 1 bis 7, dadurch gekennzeichnet, daß die Abdecklasche (8) aus einem durchsichtigen, insbesondere farbigen Material besteht.

9. Ablageelement nach einem der Ansprüche 1 bis 8, dadurch gekennzeichnet, daß zumindest der Träger (2) aus einem thermoplastischen Kunststoff besteht und über seinen Heftrand (4) mit dem Rückenteil eines bucheinbandartigen Schutzdeckels verschweißt ist.

10. Ablageelement nach einem der Ansprüche 1 bis 9, dadurch gekennzeichnet, daß der Träger (2) am Heftrand (4) mit einer Lochung für einen Schutzdeckel mit Ringmechanik versehen ist.

## Claims

1. A filing element for storing compact discs (16), together with the associated booklets (12), in folder or book form in the form of a sheet-shaped support (2) which can be or is filed by means of an insertion edge (4) in a protective cover, characterised in that the support is provided, located one above the other, with at least one first insertion pocket (3.1) for the booklet (12) and a second insertion pocket (3.2) for the CD (16), and with a holding strip (8) on the outside of the second insertion pocket (3.2) on the edge remote from the openings (5) of the insertion pockets (3.1, 3.2), which strip covers only a partial region of the second insertion pocket (3.2), the openings (5) in the insertion pockets (3.1, 3.2) facing the insertion edge (4) and the first insertion pocket (3.1) corresponding in its dimensions to the list of contents (11) included with a CD case and the distance of the edge of the opening (5) of the first insertion pocket (3.1) from the closest edge of the holding strip (8) being somewhat shorter than the width of one side of a booklet (12) associated with a CD case.

2. A filing element according to Claim 1, characterised in that both insertion pockets (3.1, 3.2) are each provided in the region of the edge of their opening (5) with a gripping cutout (9).

3. A filing element according to one of Claims 1 or 2, characterised in that the holding strip (8) is pocket-shaped and that its insertion opening extends parallel to the openings (5) of the insertion pockets (3.1, 3.2).

4. A filing element according to one of Claims 1 to 3, characterised in that the holding strip (8) is provided with at least one gripping tab (10) which points towards the opening (5) of the insertion pocket (3.1).

5. A filing element according to one of Claims 1 to 4, characterised in that at least the support (2) consists of a transparent material.

6. A filing element according to one of Claims 1 to 5, characterised in that the dimension of the insertion depth of the second insertion pocket (3.2) corresponds to half the diameter of a CD.

7. A filing element according to one of Claims 1 to 6, characterised in that the material forming the second insertion pocket (3.2) has a velvet-like surface structure at least on its inner surface.

8. A filing element according to one of Claims 1 to 7, characterised in that the cover strip (8) consists of a transparent, in particular coloured, material.

9. A filing element according to one of Claims 1 to 8, characterised in that at least the support (2) consists of a thermoplastic material and is bonded by means of its insertion edge (4) to the rear part of a binding-like protective cover.

10. A filing element according to one of Claims 1 to 9, characterised in that the support (2) is provided on the insertion edge (4) with holes for a protective lid with a ring mechanism.

## Revendications

1. Elément de classement destiné à ranger des disques compacts (16) avec leurs livrets de texte (12) associés, sous forme de classeur ou de livre, constitué d'un support (2) en forme de feuille qui peut être ou est relié dans une couverture de protection par l'intermédiaire d'un bord de reliure (4), caractérisé en ce que le support comporte au moins une première pochette d'insertion (3.1) pour le livret de texte (12) et une deuxième pochette d'insertion (3.2) pour le CD (16), qui sont situées l'une au-dessus de l'autre, ainsi qu'une languette de retenue (8) disposée sur la face extérieure de la deuxième pochette d'insertion (3.2) sur le bord opposé aux ouvertures (5) des pochettes d'insertion (3.1, 3.2), languette qui ne recouvre qu'une zone partielle de la deuxième pochette d'insertion (3.2), les ouvertures (5) des pochettes d'insertion (3.1, 3.2) étant orientées en direction du bord de reliure (4), les dimensions de la première pochette d'insertion (3.1) correspondant à celles d'un sommaire (11) joint à un boîtier de CD, et l'écartement du bord de l'ouverture (5) de la première pochette d'insertion (3.1) par rapport au bord le plus proche de la languette de retenue (8) étant légèrement inférieur à la largeur d'un côté d'un livret de texte (12) joint à un boîtier de CD.

2. Elément de classement selon la revendication 1, caractérisé en ce que les deux pochettes d'insertion (3.1, 3.2) comportent chacune un évidement de préhension (9) au niveau du bord de leur ouverture (5).

3. Elément de classement selon l'une des revendications 1 ou 2, caractérisé en ce que la languette de retenue (8) est réalisée sous forme d'une pochette, et en ce que son ouverture d'insertion s'étend parallèlement aux ouvertures (5) des pochettes d'insertion (3.1, 3.2).

4. Elément de classement selon l'une des revendications 1 à 3, caractérisé en ce que la languette de retenue (8) comporte au moins un talon de préhension (10), qui est orienté en direction de l'ouverture (5) de la pochette d'insertion (3.1).

5. Elément de classement selon l'une des revendications 1 à 4, caractérisé en ce qu'au moins le support (2) est constitué d'une matière transparente.

6. Elément de classement selon l'une des revendications 1 à 5, caractérisé en ce que le dimensionnement de la profondeur d'insertion de la deuxième pochette d'insertion (3.2) correspond à la moitié du diamètre d'un CD.

7. Elément de classement selon l'une des revendications 1 à 6, caractérisé en ce que la matière formant la deuxième pochette d'insertion (3.2) comporte une structure de surface veloutée, au moins sur sa face située à l'intérieur.

8. Elément de classement selon l'une des revendications 1 à 7, caractérisé en ce que la languette de recouvrement (8) est constituée d'une matière transparente, notamment d'une matière de couleur.

9. Elément de classement selon l'une des revendications 1 à 8, caractérisé en ce qu'au moins le support (2) est constitué d'une matière thermoplastique, et est soudé par l'intermédiaire de son bord de reliure (4) sur la face arrière d'une couverture de protection du type reliure de livre.

10. Elément de classement selon l'une des revendications 1 à 9, caractérisé en ce que le bord de reliure (4) du support (2) est muni d'une perforation pour une couverture de protection à mécanique annulaire.
